# EUROPEAN PATENT APPLICATION

(11) **EP 4 848 098 A1**
(43) Date of publication of application: **02.12.2026**
(21) Application number: 26167276.0
(22) Date of filing: 24.03.2026
(51) Int. Cl.: G06F 16/242, G06F 16/901

(54) **TABLE QUESTION AND INSIGHT SYSTEM**

(30) Priority: 30.05.2025 US 202519224386
(71) Applicant: Fujitsu Limited, Kawasaki-shi, Kanagawa 211-8588 (JP)
(72) Inventor: HASEGAWA, Sou, Santa Clara, California, 94054 (US); CHEN, Wei-Peng, Santa Clara, California, 94054 (US)
(74) Representative: Hoffmann Eitle

(57) **Abstract**

According to an aspect of an embodiment, a method to generate a response to a query may include obtaining metadata of one or more tabular datasets from a set of sources, in which the metadata across the one or more tabular datasets has one or more discrepancies. The metadata may be converted into unified metadata based on a metadata schema. A knowledge graph representing the one or more tabular datasets may be generated based on the unified metadata. The method may include receiving a query from a user. A report option for the query may be determined based on complexity of the query. A report corresponding to the query may be generated based on the report option and the knowledge graph. In some embodiments, the report may include at least one quantitative deliverable corresponding to the query.

## Description

### FIELD

The embodiments discussed in the present disclosure are related to generating responses to queries utilizing knowledge graphs representing tabular datasets.

### BACKGROUND

Table question answer (Table QA) is an area of natural language processing focused on answering user queries based on structured tabular data, such as database tables. Table QA requires models to interpret and reason over the structured format, including rows, columns, headers, and cell values. A common approach may include a retrieve-and-generate framework. Relevant portion of the table may be retrieved based on the query, and an answer may be generated using the retrieved information.

The subject matter claimed herein is not limited to embodiments that solve any disadvantages or that operate only in environments such as those described above. Rather, this background is only provided to illustrate one example technology area where some embodiments described herein may be practiced.

### SUMMARY

According to an aspect of an embodiment, a method to generate a response to a query may include obtaining metadata of one or more tabular datasets from a set of sources, in which the metadata across the one or more tabular datasets has one or more discrepancies. The metadata may be converted into unified metadata based on a metadata schema. A knowledge graph representing the one or more tabular datasets may be generated based on the unified metadata. The method may include receiving a query from a user. A report option for the query may be determined based on complexity of the query. A report corresponding to the query may be generated based on the report option and the knowledge graph. In some embodiments, the report may include at least one quantitative deliverable corresponding to the query.

The object and advantages of the embodiments will be realized and achieved at least by the elements, features, and combinations particularly pointed out in the claims. It is to be understood that both the foregoing general description and the following detailed description are exemplary and explanatory and are not restrictive of the invention, as claimed.

### BRIEF DESCRIPTION OF THE DRAWINGS

Example embodiments will be described and explained with additional specificity and detail through the use of the accompanying drawings in which:
FIG. 1A illustrates an example system configured to generate knowledge graphs, in accordance with one or more embodiments of the present disclosure;
FIG. 1B illustrates an example knowledge graph, in accordance with one or more embodiments of the present disclosure;
FIGS. 2A illustrates an example system for table question answering process, in accordance with at least one embodiment of the present disclosure;
FIGS. 2B illustrates example report generation system, in accordance with at least one embodiment of the present disclosure;
FIG. 2C illustrates another example report generation systems, in accordance with at least one embodiment of the present disclosure;
FIG. 3 illustrates a flow chart of an example method of table question answering, arranged in accordance with at least one embodiment of the present disclosure; and
FIG. 4 illustrates a block diagram of an example computing system that may be used with a dataset selection system, in accordance with one or more embodiments of the present disclosure.

### DETAILED DESCRIPTION

Tabular data is a structured form of data organized into rows and columns. In general, each column represents a specific attribute or variable, with a header that describes the type of information the column contains. Each row represents a single record or entry, with cells holding values corresponding to the attributes. As tabular data is inherently structured, such that the unstructured data may be stored, manipulated, and analyzed more efficiently. Such tabular data may provide organized data that may be suitable for tasks such as reporting, querying, and decision making.

In some instances, table question answering (table QA) may include generating answers to queries based on the structured tabular data. For instance, the data from the tabular data may be retrieved based on the user queries, and the answers to the queries may be generated based on the retrieved tabular data. In some instances, the tabular data in which the data is retrieved may be from multiple sources. For example, the tabular data may include open data from different sources. Open data refers to data that is freely available for the public to access, use, modify, and/or share, typically without restrictions. Various organizations and governments around the world release such open data from a wide range of domains. Some examples of the sources include government portals (e.g., data.gov, EU open data portal, etc.), international organizations (e.g., world bank open data, etc.), scientific and research platforms (e.g., Kaggle datasets, Zenodo, etc.), industry specific, etc. In some instances, the data from different sources may be stored in a data lake or a centralized repository.

Different approaches and/or methods may be used in the retrieval-and-generate process. For example, an existing approach includes, rather than relying solely on raw table data, implementing a text encoder to convert the table metadata into embeddings or vector representations. The embeddings may enable semantic retrieval, allowing the system to identify relevant tables and/or table segments. After the retrieval of relevant tables and/or table segments, the data is extracted from the table. For example, methods such as Text-to-SQL may be used to execute SQL to extract cells or data corresponding to the cells of the table. The identification and the retrieval processes may help narrow the context from which the generator generates answers. However, such an approach may be costly as the size of the data lake increases. The increased size leads to increase in cost of comparing the vectors or embeddings to find similarities and/or to identify relevant tables and/or table segments.

Additionally, in general, the table QA approach may generate a simple answer to the query. For example, in response to identifying the relevant tables and/or table segments, a simple answer to the query is generated. However, such an approach or the simple answer may not be adequate in certain instances. For example, a simple answer may not be adequate for a query such as "How have CO2 emissions changed over in the decade in Japan, and what should we do to reduce further emissions?" Such a query may require further elaborations than a simple answer. Additionally, the use of open data may increase the available information, such that insights related to the answer may be valuable.

According to one or more embodiments of the present disclosure, a method for table QA may include converting metadata from different tabular datasets into unified metadata. The unified metadata may be utilized to generate a knowledge graph, in which all the datasets are connected via multiple aspects. For example, the data from the tabular datasets may be combined and organized into a knowledge graph in which the data are organized based on relationships between the data. The knowledge graph may be used as the source of data retrieval for table QA. Additionally or alternatively, according to one or more embodiments of the present disclosure, the method may include providing different types of answers based on the type of the query. For example, the different types of answers may include one or more of a quick answer, an answer, and/or an insight.

Embodiments of the present disclosure will be explained with reference to the accompanying drawings.

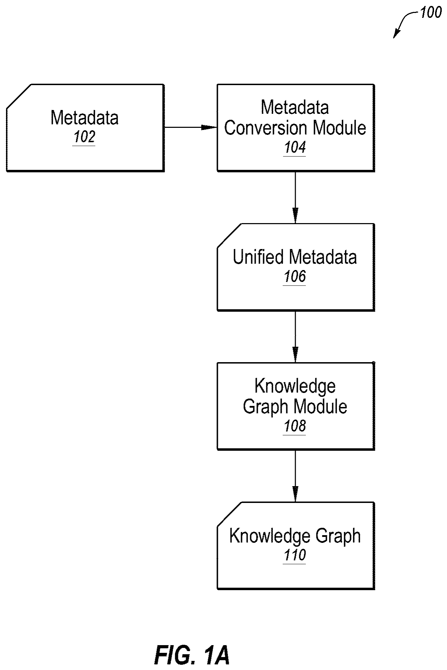

FIG. 1A illustrates an example system 100 configured to generate knowledge graphs, in accordance with one or more embodiments of the present disclosure. In some embodiments, the system 100 may include a metadata conversion module 104 and a knowledge graph module 108. In general, the system 100 may be configured to generate knowledge graphs (e.g., knowledge graph 110) based on metadata 102. In particular, the system 100 may generate the knowledge graph 110 based on unified metadata 106, generated from the metadata 102. The knowledge graph 110 may be used as source of data for table question answering (table QA) process.

In the present disclosure, the metadata 102 refers to the descriptive information that provides context concerning the data contained in tabular datasets, such as column headers, table titles, descriptions, data types, units, sample values, etc. In some embodiments, the metadata 102 may include metadata from multiple tabular datasets. For example, the metadata 102 may include descriptive information of multiple datasets. In some embodiments, the metadata 102 may originate from multiple sources. For example, the sources may include government portals (e.g., data.gov, EU open data portal, etc.), international organizations (e.g., world bank open data, etc.), scientific and research platforms (e.g., Kaggle datasets, Zenodo, etc.), industry specific, etc.

The metadata 102 from different tabular datasets and/or sources may be heterogenous. For example, one dataset may use "Country" as a column header while another dataset uses "Nation" or "state," even though the column headers may refer to the same concept. As another example, the metadata 102 derived from different tabular datasets and/or sources may vary in units of measurement, date formats, terminologies, etc. Such heterogenous metadata 102 may pose challenges for data integration, retrieval, and downstream analysis. For instance, the data may not be aligned for the data to be interpreted consistently.

In some embodiments, the metadata conversion module 104 may be configured to generate the unified metadata 106. The unified metadata 106 may include the metadata 102 represented in a unified metadata representation. For example, the unified metadata 106 may represent the metadata 102 in a standardized, structured, and semantically aligned format. In some embodiments, the metadata conversion module 104 may establish and/or define a common vocabulary to be used in the unified metadata 106.

In some embodiments, the metadata conversion module 104 may be configured to identify certain expected properties from the metadata 102. For example, the metadata conversion module 104 may attempt to identify title, description, identifier, distribution, unit, keyword, publisher, accrual periodicity, landing page, license, language, spatial, temporal, indicator, data coverage, etc. In instances in which certain properties are not identified, the metadata conversion module 104 may be configured to derive and/or extract such properties from existing information in the metadata 102.

In some embodiments, the knowledge graph module 108 may be configured to extract information from the unified metadata 106 to generate the knowledge graph 110. The knowledge graph may include a set of nodes in which each node represents a property. The nodes may be connected via edges representing relationships between the nodes. The nodes may have different types of properties. For example, the node types may include dataset, location, domain, keyword, year, indicator, organization, etc.

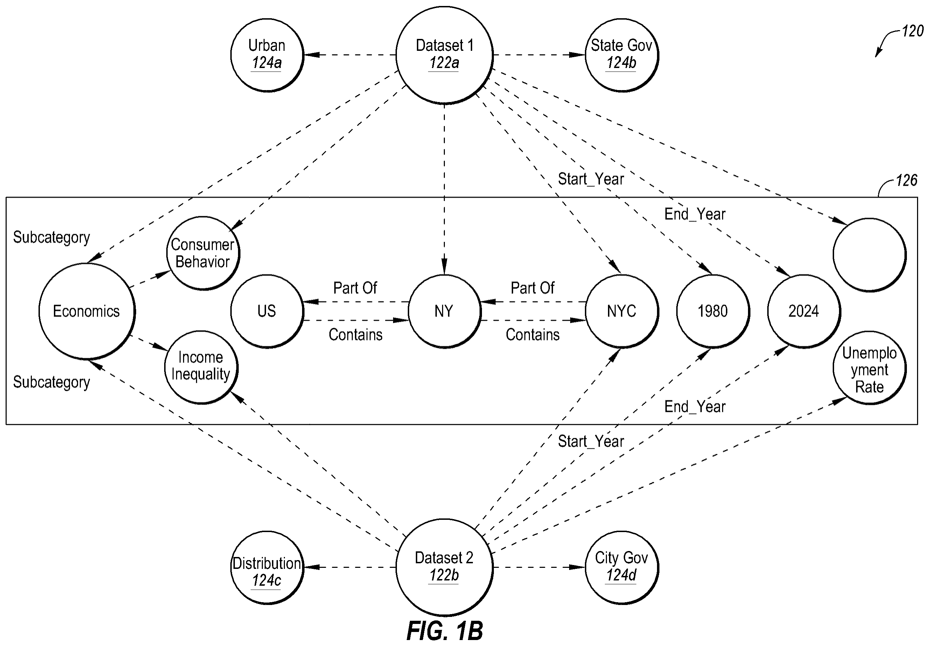

For example, FIG. 1B illustrates an example knowledge graph 120, in accordance with one or more embodiments of the present disclosure. In some embodiments, the knowledge graph 120 may correspond to and/or be an example of the knowledge graph 110 of FIG. 1A. For example, the knowledge graph 120 may be generated based on unified metadata such as the unified metadata 106. In some embodiments, the knowledge graph 120 may include different types of nodes corresponding to different properties of the unified metadata.

For example, the knowledge graph 120 may include dataset nodes representing different datasets included in the unified metadata. For example, the knowledge graph 120 may include a first dataset node 122a and a second dataset node 122b (collectively referred to as the dataset nodes 122), representing a first dataset in the unified metadata and a second dataset in the unified metadata, respectively. The dataset nodes 122 may have one or more descriptive nodes describing the dataset nodes 122. The descriptive nodes may describe certain properties of the dataset nodes 122 such as keywords describing the datasets corresponding to the dataset nodes 122, sources of the datasets, etc. For example, the knowledge graph 120 may include a first descriptive node 124a, a second descriptive node 124b, a third descriptive node 124c, and a fourth descriptive node 124d (collectively referred to as the descriptive nodes 124). The first descriptive node 124a may represent a keyword associated with the first dataset node 122a, the second descriptive node 124b may represent a source of the first dataset node 122a, the third descriptive node 124c may represent a keyword associated with the second dataset node 122b, and the fourth descriptive node 124d may represent the source of the second dataset node 122b. While illustrated with two dataset nodes 122 and four descriptive nodes 124, the knowledge graph 120 may include any other suitable number of dataset nodes 122 and the descriptive nodes 124.

In some embodiments, the knowledge graph 120 may include a set of intermediate nodes 126. The intermediate nodes 126 may represent different properties of the dataset nodes 122. For example, the intermediate nodes 126 may include location nodes, domain nodes, year nodes, indicator nodes, etc. that represent the data included in the datasets corresponding to the dataset nodes 122. In some embodiments, the intermediate nodes 126 may be connected via edges representing different relationships between the intermediate nodes 126. In some embodiments, the edges may be intertwined among the intermediate nodes 126 associated and/or stemming from the first dataset node 122a and the second dataset node 122b. For example, an intermediate node representing a keyword (e.g., economics) may be associated with both the first dataset node 122a and the second dataset node 122b.

In some embodiments, the edges may be directional edges, in which the edges represent relationships that have origin and target. For example, the edges may represent how relationships flow between the nodes. In these and other embodiments, the directional edges may be unilateral and/or bilateral based on the types of relationships between the nodes. Some examples of the relationships represented based on the directional edges may include subcategories, inclusions, table structure relationships, semantic relationships, etc.

Returning to FIG. 1A, the knowledge graph 110 may organize multiple datasets from data sources such as open data such that the relationships between the datasets are provided in a unified manner. The knowledge graph 110 may help accelerate the speed and/or increase the efficiency of the dataset search. For example, searching through multiple datasets based on the knowledge graph 110 may be faster and/or more efficient compared to searching through the datasets based on the calculations of similarity between the embeddings corresponding to the datasets. The improved speed and/or efficiency may further improve the speed and/or efficiency of table question answering process performed based on the knowledge graph 110 compared to embeddings of the datasets.

Modifications, additions, or omissions may be made to the system 100 without departing from the scope of the present disclosure. For example, in some embodiments, the system 100 may include any number of other components that may not be explicitly illustrated or described.

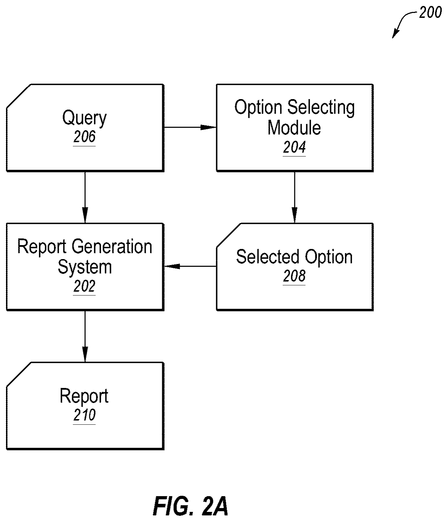

FIG. 2A illustrates an example system 200 for table question answering process, in accordance with one or more embodiments of the present disclosure. In some embodiments, the system 200 may include a report generation system 202 and an option selecting module 204. In general, the system 200 may be configured to generate a report 210 including an answer to a query 206.

In some embodiments, the query may be obtained from an external source or an entity, such as a user. In some embodiments, the query 206 may be in the form of a natural language question that seeks specific information derived from one or more structured datasets (e.g., tabular datasets). The query 206 may reflect the intent of the user-such as comparing values, finding trends, identifying entities, or retrieving summaries-without requiring the user to know or understand the underlying schema or structure of the data or structured datasets.

The report generation system 202 may be configured to perform one or more operations with respect to the query 206 to generate the report 210. In some embodiments, the content or level of details of the report 210 may vary based on the type of the query 206. For example, a concise or a quick answer may be sufficient for certain types of queries, while other queries warrant for more details or insights. For example, a query such as "Which location held Summary Olympic in 2021?" may require a simple or quick answer such as "Tokyo." Contrastingly, a more complex question such as "How have CO2 emissions changed over in the decade in China?" or "What are some potential things to do that may reduce the CO2 emissions?" may require a more complex answer.

In some embodiments, report generation system 202 may determine the extent and/or content of the report based on a selected option 208 received from the option selecting module 204. The option selecting module 204 may be configured to analyze the query 206 to determine the selected option 208. In some embodiments, the option selecting module 204 may be or include an artificial intelligence (AI) model, such as a large language model (LLM), configured to determine the selected option 208. For example, the AI model may be given a prompt to analyze the query 206 to determine a suitable option. In some embodiments, the options that the selected option 208 selected from may include a quick answer, an answer, and an insight. The options may include different levels of information. For example, a quick answer may only include a quantitative deliverable, an answer includes a report including a quantitative deliverable, and an insight may include a report including multiple quantitative deliverables. The option selecting module 204 may analyze the query and select the quick answer option in instances the user wants just the quantitative information without long text. The option selecting module 204 may select the insight option in instances the user wants detailed report including multifaceted report. For other types of queries, the option selecting module 204 may select the answer option.

In the present disclosure, a quantitative deliverable may refer to a single numerical result or metric derived from data, generally answering a specific, well-defined question. A quantitative deliverable is generally concise and standalone without the need for surrounding context or explanation. In some embodiments, a quantitative deliverable may include visualizations such as a graph. A graph may visualize numeric data, answer the query 206 by showing trends, comparisons, and/or distributions, and/or replace a textual numeric summary.

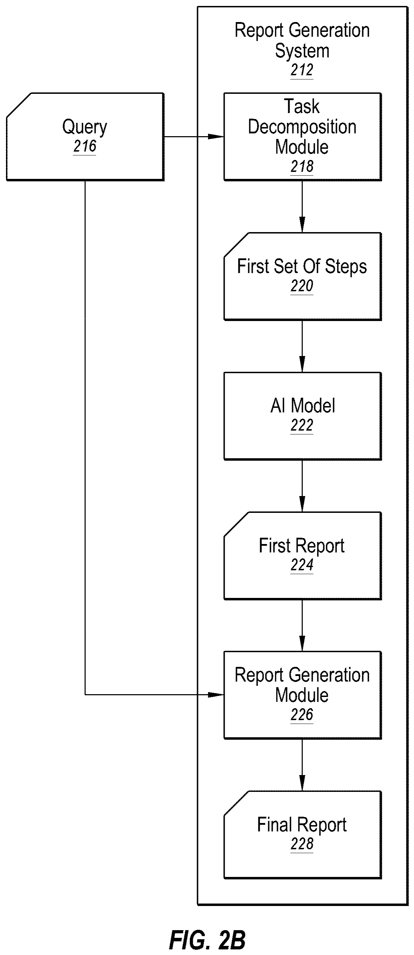

With reference to FIG. 2B, FIG. 2B illustrates an example report generation system 212, in accordance with at least one embodiment of the present disclosure. In some embodiments, the report generation system 212 may correspond to or be an example of the report generation system 202 of FIG. 2A. The report generation system 212 may be illustrated, in particular, to show components with respect to generating an answer to a query 216 (e.g., the query 206 of FIG. 2A) for a quick answer option and/or a report for the answer option. The quick answer option and the answer option are described in further detail with respect to FIG. 2A. The report generation system 212 may include additional components that are not specifically illustrated.

In general, the report geeration system 212 may include a task decomposition module 218, an AI model 222, and a report generation module 226. The task decomposition module 218 may be configured to generate a first set of steps 220 based on the query 216. In these and other embodiments, the first set of steps 220 may include a plan or steps to generate a quantitative deliverable (e.g., statistical values, visualization, etc.) for the query 216. The task decomposition module 218 may decompose the task of generating a quantitative deliverable into multiple steps. In some embodiments, the task decomposition module 218 may be or include the AI model 222. For example, the task decomposition module 218 may be the AI model, such as an LLM, that is configured to generate the first set of steps 220. In other embodiments, the task decomposition module 218 and the AI model 222 may be separate.

In some embodiments, each step of the first set of steps 220 may be executed by the AI model 222. In some embodiments, the AI model 222 may be or include an LLM. In such instances, the first set of steps 220 may include steps that cause execution of certain functions by the LLM. In some embodiments, the first set of steps 220 may define not only the functions to be performed by the AI model 222 (e.g., the LLM), but also the information that is given to the AI model 222 to perform the functions.

In some embodiments, the first set of steps 220 may include different number of steps based on the query 216. In general, each step of the first set of steps 220 may include certain properties defining the step. Some examples of the properties may include description (e.g., brief description of step about what is executed in the step), script (e.g., script type, such as Neo4j or Python), function (e.g., function name), input file (e.g., in instances the results of previous steps are utilized, the input file containing the results are defined), output file (e.g., in instances the results of steps are passed on to following steps, the output file name is defined), output format (e.g., the format of the output file is defined), etc.

Some example functions that may be included in the first set of steps 220, and particularly within the function property of the steps, may include dataset search, dataset search filtered by locations, dataset search filtered by datetime, dataset search filtered by locations and datetime, load dataset (e.g., select a minimum set of datasets from retrieved datasets and load the datasets), wrangle dataset (e.g., merge and clean datasets), arbitrary code (e.g., any kind of code, such as code for visualization and calculation of statistical values), etc.

In these and other embodiments, the AI model 222 may be configured to construct the arguments for the functions to be executed. For example, with respect to the dataset search function, the AI model 222 may generate arguments that may implement the dataset search function with respect to datasets and/or knowledge graphs (e.g., the knowledge graph 110 of FIG. 1A and/or the knowledge graph 120 of FIG. 1B). For example, in instances in which the knowledge graph is saved in a neo4j database, the AI model 222 may generate properties that may be utilized with a neo4j query. In these and other embodiments, the dataset search function may be configured to search the knowledge graph to identify one or more datasets that are relevant to the query 216. For example, the nodes and the edges of the knowledge graph may be analyzed to identify datasets and/or parts of the datasets that include information relevant to the query 216. In some embodiments, the search of the datasets may be filtered based on different criteria, such as locations and/or dates. In these and other embodiments, the knowledge graph may allow improved search speed compared to searching the datasets using embeddings. The names of the one or more relevant datasets may be retrieved.

In these and other embodiments, the AI model 222 may construct different arguments for other functions included in the first set of steps 220. In these and other embodiments, the functions corresponding to the first set of steps 220 may be executed such that a quantitative deliverable is generated. For example, the arguments may be constructed for operation of the function such as load dataset, wrangle dataset, and/or arbitrary code. The load dataset function may be configured to select certain datasets from the retrieved datasets and load them to the AI model 222 for further operations. For example, the AI model 222 may be configured to select certain datasets based on the names of the retrieved datasets. In these and other embodiments, the AI model 222 may be provided with certain information about the datasets along with the names, such as duration, location, coverage, to facilitate selection of the datasets. In some embodiments, a threshold number to datasets may be selected, in which the threshold number is determined based on different factors, such as size of the knowledge graph, complexity of the query 236, etc. In other embodiments, any number of datasets may be selected. The data corresponding to the selected datasets may be obtained from a data lake or open data storing the datasets.

The wrangle dataset function may be configured to merge and clean the datasets. For example, the loaded datasets may be cleaned, transformed, and/or organized into a structured and usable format for analysis, visualization, and/or machine learning. The arbitrary code function may include any other types of functions as necessary. For example, the arbitrary code may be related to generating visualizations, calculating statistical values, etc. While specific examples of functions are described, any other suitable functions may be included in the first set of steps 220. In some embodiments, the individual steps of the first set of steps 220 may be performed in a sequence. In other embodiments, the individual steps of the first set of steps 220 may be performed independently or partially independently.

In some embodiments, the first report 224 may only include the quantitative deliverable. For example, for the quick answer option, the first report 224 may only include the quantitative deliverable without further information and/or explanations. In such instances (e.g., quick answer option selected), the first report 224 may be provided to the user as the final product without further operations.

In some instances, the answer option may be selected by an option selecting module (e.g., the option selecting module 204 of FIG. 2A). In such instances, the report generation module 226 may be configured to generate a final report 228 based on the first report 224 and the query 216. In some embodiments, the report generation module 226 may be configured to add additional explanations in addition to the quantitative deliverable of the first report 224. In some embodiments, the report generation module 226 may be configured to implement a visualization-augmented retrieval-augmented generation (RAG). In instances the quantitative deliverable includes a visualization (e.g., a graph), the visualization-augmented RAG may reinforce the graph by including characterized values (e.g., maximum and/or minimum values), how the y-axis fluctuates, comparison among different series, etc., interpreted by the graph. Such information may be difficult to interpret merely with a series of numerical values, as included in the quantitative deliverable.

Modifications, additions, or omissions may be made to the report generation system 212 without departing from the scope of the present disclosure. For example, in some embodiments, the report generation system 212may include any number of other components that may not be explicitly illustrated or described.

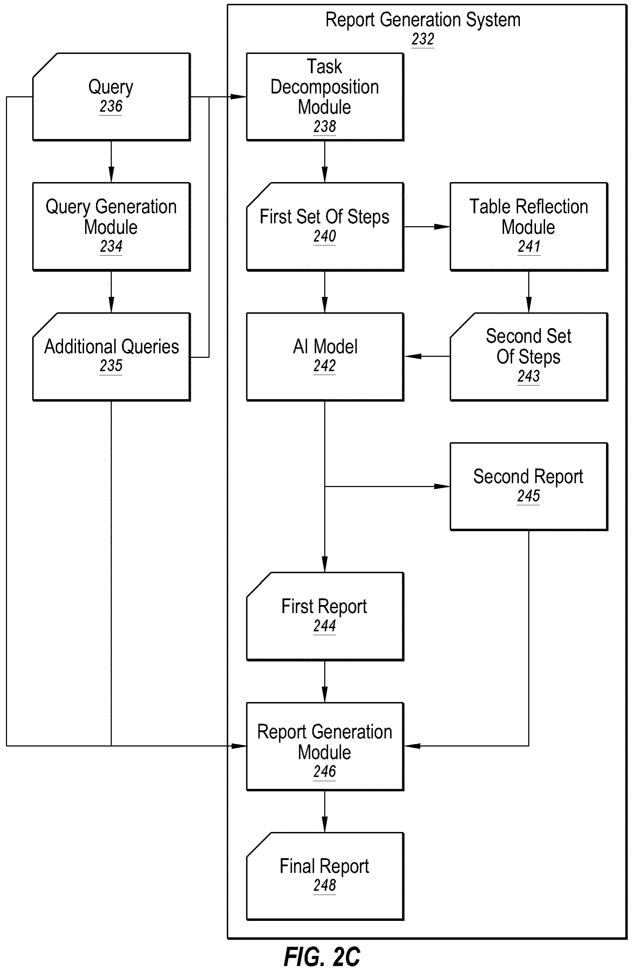

With reference to FIG. 2C, FIG. 2C illustrates another example report generation system 232, in accordance with one or more embodiments of the present disclosure. In some embodiments, the report generation system 232 may correspond to the report generation system 202 of FIG. 2A and/or the report generation system 212 of FIG. 2B. In particular, the report generation system 232 may illustrate additional elements added to the report generation system 212 of FIG. 2B. For example, a query 236 may correspond to the query 216 of FIG. 2B, a task decomposition module 238 may correspond to the task decomposition module 218 of FIG. 2B, a first set of steps 240 may correspond to the first set of steps 220 of FIG. 2B, an AI model 242 may correspond to the AI model 222 of FIG. 2B, a first report 244 may correspond to the first report 244 of FIG. 2B, a report generation module 246 may correspond to the report generation module 226 of FIG. 2B, and a final report 248 may correspond to the final report 228 of FIG. 2B. In these and other embodiments, the description of such redundant parts may correspond to the description of corresponding parts of FIG. 2B.

In some embodiments, in response to an option selecting module (e.g., the module selecting module 204 of FIG. 2A) selecting the insight option, the report generation system 232 may be configured to perform reflections in addition to the process taken to generate the final report 248 with respect to an answer option. In these and other embodiments, the reflections may refer to the process of generating more quantitate deliverables including statistical values and/or visualizations. In some embodiments, the reflections may include question reflections and/or table reflections.

The question reflections may include generating more queries relevant to the query 236 provided by the user. For example, a query generation module 234 may be configured to generate additional queries 235 based on the query 236. While illustrated as being external to the report generation system 232, in some embodiments, the query generation module 234 may be a part of the report generation system 232. In other embodiments, the query generation module 234 may be configured to communicate with the report generation system 232. In some embodiments, the query generation module 234 may be or include an AI model, such as an LLM. In some embodiments, the query generation module 234 may be or configured to communicate with the AI model 242.

In some embodiments, the additional queries 235 may include one or more queries to generate additional quantitative deliverables. For example, the query 236 may be "What is the trend of CO2 emission in China?" and a quantitate deliverable may be generated based on the query 236. In such an example, the additional queries 235 may include queries such as "What are the main sectors contributing to emission in China, and how have their contributions changed over time?", "How do China's CO2 emissions per capita compared to other developed countries, and what factors might explain any differences?", etc.

In some embodiments, the report generation system 232 may be configured to generate additional quantitative deliverable based on the additional queries 235. For example, for each additional query of the additional queries 235, the report generation system 232 may go through the process of generating a set of steps (e.g., the first set of steps 240) using the task decomposition module 238 and generating a qualitative deliverable (e.g., the first report 244) using the AI model 242.

In some embodiments, the table reflection may refer to the process of utilizing unused datasets and rewriting the plan or the steps. For example, in response to retrieving datasets using the knowledge graph, only a portion of the datasets may be utilized to proceed with the remaining steps. For example, the load dataset function may select a threshold number of datasets from the retrieved datasets to be utilized. To utilize the insights that may be present in the unused datasets, one or more additional sets of steps may be generated. For example, the report generation system 232 may include a table reflection module 241 configured to generate a second set of steps 243 based on the first set of steps 240. In particular, the table reflection module 241 may be configured to obtain a list of datasets not utilized during the execution of the first set of steps 240, and to generate the second set of steps 243 utilizing at least a portion of the unused datasets. The second set of steps 243 may be executed in a similar manner to the execution of the first set of steps 240 to generate additional quantitative deliverables, such as a second report 245. While described with respect to the second set of steps 243, the table reflection module 241 may generate any suitable number of sets of steps.

In some embodiments, the additional sets of steps generated by the table reflection module 241 may be applicable to the additional queries. For example, multiple sets of steps utilizing different datasets may be implemented for each query of the additional queries 235 along with the query 236. In these and other embodiments, the number of total quantitative deliverables may correspond to (1 + *N*)(1 + *M*), in which *N* represents a number of the additional queries 235, and *M* represents number of additional sets of steps. For example, with two additional queries and one additional set of steps, the total number of quantitative deliverables generated may be six (e.g., (1 + 2)(1 + 1)).

In some embodiments, the report generation module 246 may be configured to generate the final report 248 based on the first report 244 and the additional quantitative deliverables generated based on the additional queries 235 and the additional sets of steps (e.g., the second report 245 generated based on the second set of steps 243). In these and other embodiments, the report generation module 246 may be configured to provide additional information regarding the quantitative deliverables, similar to how the report generation module 226 provides additional information about the first report 224 in FIG. 2B. For example, the report generation module 256 may implement a visualization-augmented RAG process with respect to each of the quantitative deliverables to generate the final report 248. The additional quantitative deliverables and additional information may help solidify the final report 248.

Modifications, additions, or omissions may be made to the report generation system 232 without departing from the scope of the present disclosure. For example, in some embodiments, the system 100 may include any number of other components that may not be explicitly illustrated or described.

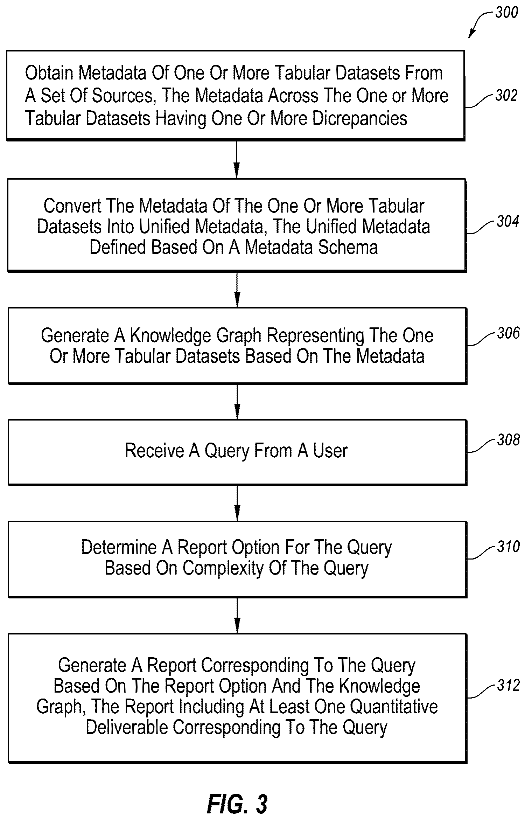

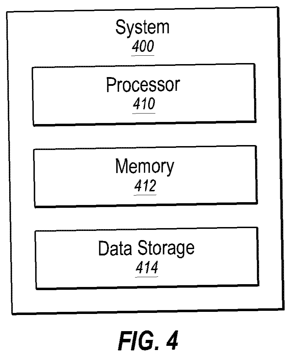

FIG. 3 illustrates a flow diagram of an example method 300, in accordance with one or more embodiments of the present disclosure. The method 300 may be performed by any suitable system, apparatus, or device. For example, the method 300 may be implemented using the system 100 of FIG. 1A, the system 200 of FIG. 2A, the report generation system 212 of FIG. 2B, the report generation system 232 of FIG. 2C and/or the computing system 400 of FIG. 4. Although illustrated with discrete blocks, the steps and operations associated with one or more blocks of the method 300 may be divided into additional blocks, combined into fewer blocks, or eliminated, depending on the particular implementation.

In some embodiments, the method 300 may begin at block 302. At block 302 metadata of one or more tabular datasets may be obtained. In some embodiments, the one or more tabular datasets may be from a set of sources. For example, the one or more tabular datasets may be obtained from Open Data, the World Bank, e-Stat (e.g., portal site for Japanese government statistics), etc. In such instances, the metadata for each tabular dataset may have different formats and/or vocabulary. In some embodiments, the one or more tabular datasets may be stored in a centralized storage location, such as a data lake.

At block 304, the metadata of the one or more tabular datasets may be converted into unified metadata. The metadata may include information that describes, explains, locates information resources of the tabular datasets. The generated metadata may differ depending on several factors, such as structure of the data, vocabulary, domain context, source system, etc. For example, a first tabular dataset may have a column named "Date of Birth" while a second tabular dataset has a column named "DOB" even in instances the two columns may include same types of data. Such disparity between the first tabular dataset and the second tabular dataset may cause the metadata generated from the first tabular dataset and the second tabular dataset to have disparities.

In these and other embodiments, the metadata may be converted into unified metadata. The unified metadata may have unified formats and structures across metadata corresponding to different tabular datasets from different sources. For example, the metadata corresponding to the columns titled "Date of Birth" and "DOB" from the first tabular dataset and the second tabular dataset, respectively, may be converted such that a same term (e.g., "DOB") is used to represent both columns. In some embodiments, the metadata may be converted into the unified metadata based on a certain standardized metadata schema. A metadata schema is a structured framework that defines how to organize metadata, including what metadata elements to include (e.g., title, author, date, etc.), what each element means (e.g., definitions), how to format or encode elements (e.g., string, date, controlled vocabularies), etc. A metadata schema may provide a template that metadata corresponding to different tabular datasets may follow such that the metadata may be unified with respect to the schema. In some embodiments, the metadata schema may be provided by a user. Additionally or alternatively, any suitable metadata schemas that are predefined and/or publicly available may be used to generate the unified metadata.

At block 306, a knowledge graph representing the one or more tabular datasets may be generated based on the metadata. A knowledge graph may refer to a structure representation of knowledge in the form of entities (e.g., nodes) and relationships (e.g., edges). In some embodiments, the knowledge graph may be generated based on key information extracted from the unified metadata. For example, key information and/or properties may be extracted from the unified metadata. The key information may include entities, relationships, and/or attributes that may be represented as nodes and edges in a graph structure. For example, the key information may include dataset, domain, location, start year, end year, indicator, keyword, organization, distribution, theme or concept, etc. In these and other embodiments, the knowledge graph may be generated based on the extracted key information. For example, the extracted key information may be represented as nodes connected using edges representing the relationships between the nodes. For example, a node representing a dataset may be connected to nodes describing the dataset such as domain, location, start year, end year, keyword, organization, etc. Additionally, the nodes from different datasets that share similarities may be connected. For example, nodes representing keywords such as "consumer behavior" and "income inequality" may both be connected to a node representing a larger category of "economics". In some embodiments, the knowledge graph may correspond to the knowledge graph 110 of FIG. 1A and/or the knowledge graph 120 of FIG. 1B.

In some embodiments, the knowledge graph may include nodes and edges, in which the nodes represent the one or more tabular datasets and properties (e.g., key information) of the one or more tabular datasets. The nodes may be connected via the edges representing relationships between the nodes. In some embodiments, the nodes associated with different tabular datasets may be intertwined based on similarities between the nodes. For example, a first node associated with a first tabular dataset and a second node associated with a second tabular dataset may be connected via an edge for their similarity (e.g., same category or topic).

At block 308, a query may be received from a user. The query may be in the form of a natural language question that seeks specific information derived from one or more structured datasets (e.g., tabular datasets). The query may reflect the intent of the user-such as comparing values, finding trends, identifying entities, or retrieving summaries-without requiring the user to know or understand the underlying schema or structure of the data or structured datasets.

At block 310, a report option for the query may be determined based on the complexity of the query. The complexity of the query may represent the intent and/or goal of the user providing the query. For example, the user may want just quantitative information without long text or want a detailed report including multifaceted report. Such intent of the user may be determined based on the types of queries. For example, a fact-based query such as "What is the capital of France?" may warrant a short answer. Contrastingly, queries entailing explanations, comparisons, analysis, instructions, etc. may warrant a longer answer. For example, a query "how does the economy of France compared to economy of England?" may warrant a longer answer or multifaceted report. In some embodiments, an option selecting module (e.g., the option selecting module 204 of FIG. 2A) may be configured to determine a report option or a selected option for the query. In some embodiments, the option selecting module may be or include an AI model (e.g., an LLM) trained to analyze and categorize the query based on the complexity of the query. In some embodiments, the complexity of the query may be represented using different levels. For example, the option selecting module may categorize a given query as one of a first complexity level, a second complexity level, and a third complexity level, in which the first complexity level corresponds to the lowest level of complexity and the third complexity corresponds to the highest level of complexity.

In some embodiments, the option selecting module may select one of a quick answer option, an answer option, and an insight option based at least on the level of complexity of the query. For example, the quick answer option may be selected for queries with the first complexity level, the answer option may be selected for queries with the second complexity level, and the insight option may be selected for queries with the third complexity level. For instance, the quick answer option may be selected for queries that warrant a short answer or a single quantitative deliverable. The insight option may be selected for queries that warrant multifaceted report including multiple quantitative deliverables. The answer option may be selected for queries that do not fall into the quick answer option or the insight option. For example, the answer option may include queries that request a single quantitative deliverable along with some additional information. For example, a query "what is the capital of France and why was it selected as the capital" may warrant a quick answer of "Paris" along with an explanation of why Paris became the capital of France.

At block 312, a report corresponding to the query may be generated based on the report option and the knowledge graph. In some embodiments, the report may include at least one quantitative deliverable corresponding to the query. A quantitative deliverable may refer to a single numerical result or metric derived from data, generally answering a specific, well-defined question. In some embodiments, the quantitative deliverable may include a visualization. For example, the quantitative deliverable may be a visualized graph.

In some embodiments, the content of the report may vary based on the report option. For example, the report generated based on the quick answer option may only include the quantitative deliverable corresponding to the query. The report generated based on the answer option may include the quantitative deliverable corresponding to the query and additional information regarding the quantitative deliverable. The report generated based on the insight option may include multiple quantitative deliverables and additional information regarding the multiple quantitative deliverables. In some embodiments, the different options and corresponding reports may be described in further detail with respect to FIGS. 2B-2C of the present disclosure.

In some embodiments, generating the report may include generating a plan to respond to the query. In these and other embodiments, the plan may include a set of steps to be executed. Each step of the set of steps may define a function to be executed by an artificial intelligence (AI) model. In some embodiments, the set of steps may be executed using the AI model such that the report may be generated.

In some embodiments, generating the report may further include generating one or more additional queries relevant to the query. For example, in instances the report option is the insight option, one or more additional queries may be generated. In some embodiments, the generation of additional queries may be described in further detail with respect to the query generation module 234 of FIG. 2C of the present disclosure. In some embodiments, the set of steps may be executed, using the AI model, with respect to each additional query of the one or more additional queries. The additional queries may cause a generation of respective quantitative deliverables. The respective quantitative deliverables may provide additional context, information, and/or details of the quantitative deliverable generated based on the original query.

In some embodiments, the set of steps may include various functions to be executed. For example, the set of steps may include identifying one or more relevant tabular datasets relevant to the query from the knowledge graph, selecting a subset of the one or more relevant tabular datasets to be loaded to the AI model, loading the AI model with data corresponding to the subset of the one or more relevant tabular datasets, and generating the report based on the data corresponding to the subset of the one or more relevant tabular datasets.

In some embodiments, the set of steps may further include identifying unused tabular datasets from the one or more relevant tabular datasets. In some embodiments, the unused tabular datasets may represent the one or more relevant tabular datasets not loaded to the AI model. In some embodiments, generating one or more additional sets of steps utilizing the unused tabular datasets may be generated. The one or more additional sets of steps may be executed to generate additional quantitative deliverables.

Modifications, additions, or omissions may be made to the method 300 without departing from the scope of the present disclosure. For example, the outlined steps and operations are only provided as examples, and some of the steps and operations may be optional, combined into fewer steps and operations, or expanded into additional steps and operations without detracting from the essence of the disclosed embodiments.

FIG. 4 illustrates a block diagram of an example computing system 400 that may be used with respect to dataset selection system, according to at least one embodiment of the present disclosure. For example, the computing system 400 may be used to implement dataset selection and model finetuning framework discussed with respect to FIGS. 1A-2.

The computing system 400 may include a processor 410, a memory 412, a data storage 414, and a user interface 316. The processor 410, the memory 412, the data storage 414, and the user interface may be communicatively coupled.

In general, the processor 410 may include any suitable special-purpose or general-purpose computer, computing entity, or processing device including various computer hardware or software modules and may be configured to execute instructions stored on any applicable computer-readable storage media. For example, the processor 410 may include a microprocessor, a central processing unit (CPU), a graphics processing unit (GPU), a microcontroller, a digital signal processor (DSP), an application-specific integrated circuit (ASIC), a Field-Programmable Gate Array (FPGA), or any other digital or analog circuitry configured to interpret and/or to execute program instructions and/or to process data. Although illustrated as a single processor in FIG. 4, the processor 410 may include any number of processors configured to, individually or collectively, perform or direct performance of any number of operations described in the present disclosure. Additionally, one or more of the processors may be present on one or more different electronic devices, such as different servers.

In some embodiments, the processor 410 may be configured to interpret and/or execute program instructions and/or process data stored in the memory 412, the data storage 414, or the memory 412 and the data storage 414. In some embodiments, the processor 410 may fetch program instructions from the data storage 414 and load the program instructions in the memory 412. After the program instructions are loaded into memory 412, the processor 410 may execute the program instructions.

The memory 412 and the data storage 414 may include computer-readable storage media for carrying or having computer-executable instructions or data structures stored thereon. Such computer-readable storage media may include any available media that may be accessed by a general-purpose or special-purpose computer, such as the processor 410. By way of example, and not limitation, such computer-readable storage media may include tangible or non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other storage medium which may be used to store particular program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 410 to perform a certain operation or group of operations.

The user interface 316 may include any device to allow a user to interface with the computing system 400. For example, the user interface 316 may include a mouse, a track pad, a keyboard, buttons, camera, and/or a touchscreen, among other devices. The user interface 316 may receive input from a user and provide the input to the processor 410.

Modifications, additions, or omissions may be made to the computing system 400 without departing from the scope of the present disclosure. For example, in some embodiments, the computing system 400may include any number of other components that may not be explicitly illustrated or described.

Terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc. Additionally, the use of the term "and/or" is intended to be construed in this manner.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B" even if the term "and/or" is used elsewhere.

All examples and conditional language recited in the present disclosure are intended for pedagogical objects to aid the reader in understanding the present disclosure and the concepts contributed by the inventor to furthering the art, and are to be construed as being without limitation to such specifically recited examples and conditions. Although embodiments of the present disclosure have been described in detail, various changes, substitutions, and alterations could be made hereto without departing from the spirit and scope of the present disclosure.

## Claims

1. A method comprising:
obtaining metadata of one or more tabular datasets from a plurality of sources, the metadata across the one or more tabular datasets having one or more discrepancies;
converting the metadata of the one or more tabular datasets into unified metadata, the unified metadata defined based on a metadata schema;
generating a knowledge graph representing the one or more tabular datasets based on the unified metadata;
receiving a query from a user;
determining a report option for the query based on a complexity of the query; and
generating a report corresponding to the query based on the report option and the knowledge graph, the report including at least one quantitative deliverable corresponding to the query.

2. The method of claim 1, wherein generating the knowledge graph representing the one or more tabular datasets based on the metadata comprises:
extracting key information from the unified metadata; and
generating the knowledge graph based on the extracted key information.

3. The method of claim 1, wherein the knowledge graph includes nodes representing the one or more tabular datasets and properties of the one or more tabular datasets, wherein the nodes are connected via edges representing relationships between the nodes.

4. The method of claim 3, wherein the nodes associated with different tabular datasets are intertwined based on similarities between the nodes.

5. The method of claim 1, wherein the one or more tabular datasets are stored in a data lake.

6. The method of claim 1, wherein the one or more tabular datasets include datasets from a plurality of sources.

7. The method of claim 1, wherein the quantitative deliverable includes a visualization.

8. The method of claim 1, wherein generating a report corresponding to the query comprises:
generating a plan to respond to the query, the plan including a set of steps to be executed, wherein each step of the set of steps defines a function to be executed by an artificial intelligence (AI) model; and
executing the set of steps using the AI model.

9. The method of claim 8, wherein the report option corresponds to one of a quick answer option, an answer option, or an insight option.

10. The method of claim 9, wherein the report generated based on the quick answer option only includes the quantitative deliverable corresponding to the query.

11. The method of claim 9, wherein the report generated based on the answer option includes the quantitative deliverable corresponding to the query and additional information regarding the quantitative deliverable.

12. The method of claim 9, wherein the report generated based on the insight option includes a plurality of quantitative deliverables and additional information regarding the plurality of quantitative deliverables.

13. The method of claim 8, wherein generating the report corresponding to the query further comprises:
generating one or more additional queries relevant to the query; and
executing, using the AI model, the set of steps with respect to each additional query of the one or more additional queries.

14. The method of claim 8, wherein the set of steps comprises:
identifying one or more relevant tabular datasets relevant to the query from the knowledge graph;
selecting a subset of the one or more relevant tabular datasets to be loaded to the AI model;
loading the AI model with data corresponding to the subset of the one or more relevant tabular datasets; and
generating the report based on the data corresponding to the subset of the one or more relevant tabular datasets.

15. The method of claim 14, wherein the set of steps further comprises:
identifying unused tabular datasets from the one or more relevant tabular datasets, the unused tabular datasets representing the one or more relevant tabular datasets not loaded to the AI model; and
generating one or more additional sets of steps utilizing the unused tabular datasets.

16. One or more non-transitory computer-readable media storing instructions that, when executed by one or more processors, cause a system to perform operations, the operations comprising:
obtaining metadata of one or more tabular datasets from a plurality of sources, the metadata across the one or more tabular datasets having one or more discrepancies;
converting the metadata of the one or more tabular datasets into unified metadata, the unified metadata defined based on a metadata schema;
generating a knowledge graph representing the one or more tabular datasets based on the unified metadata;
receiving a query from a user;
determining a report option for the query based on a complexity of the query; and
generating a report corresponding to the query based on the report option and the knowledge graph, the report including at least one quantitative deliverable corresponding to the query.

17. The one or more non-transitory computer-readable media of claim 16, wherein generating the knowledge graph representing the one or more tabular datasets based on the metadata comprises:
converting the metadata of the one or more tabular datasets into unified metadata;
extracting key information from the unified metadata; and
generating the knowledge graph based on the extracted key information.

18. The one or more non-transitory computer-readable media of claim 16, wherein generating a report corresponding to the query comprises:
generating a plan to respond to the query, the plan including a set of steps to be executed, wherein each step of the set of steps defines a function to be executed by an artificial intelligence (AI) model; and
executing the set of steps using the AI model.

19. The one or more non-transitory computer-readable media of claim 18, wherein the report option corresponds to one of a quick answer option, an answer option, or an insight option.

20. The one or more non-transitory computer-readable media of claim 16, wherein the one or more tabular datasets include datasets from a plurality of sources.
